# EUROPEAN PATENT SPECIFICATION

(11) **EP 3 748 880 B1**
(45) Date of publication and mention of the grant of the patent: **13.09.2023**
(21) Application number: 19179185.4
(22) Date of filing: 07.06.2019
(51) Int. Cl.: H04J 14/02, H04J 14/08, H04Q 11/00

(54) **FULL DUPLEX OPTICAL COMMUNICATION WITH IMPROVED SPECTRAL EFFICIENCY**
OPTISCHE VOLLDUPLEXKOMMUNIKATION MIT VERBESSERTER SPEKTRALER EFFIZIENZ
COMMUNICATION OPTIQUE EN DUPLEX INTÉGRAL À EFFICACITÉ SPECTRALE AMÉLIORÉE

(43) Date of publication of application: 09.12.2020
(73) Proprietor: Nokia Technologies Oy, 02610 Espoo (FI)
(72) Inventor: Maes, Jochen, 2018 Antwerpen (BE)
(74) Representative: IP HILLS NV

(56) References cited:
- WO-A1-2014/183504

## Description

### Technical Field

Various example embodiments relate to an optical line termination and optical network unit with improved spectral efficiency for bi-directional transmission in an optical communication network.

### Background

It is generally expected that at some point in time, optical communication networks will start to run out of spectrum. As a consequence thereof, there is a general need for technologies that increase the spectral efficiency in optical communication networks, in a cost-effective manner and in a backwards compatible manner with existing technologies like for instance Gigabit Passive Optical Network (GPON) or 10 Gigabit/second Symmetric Passive Optical Network (XGS-PON), which are both technologies wherein optical fibres between an optical line termination (OLT) and many optical network units (ONUs) at subscriber premises are shared to enable downstream and upstream speeds up to 10 Gbit/s. These existing technologies make use of the O-band, the "original band" or primary wavelength band that ranges in wavelength from 1260 nm to 1360 nm for optical communications.

The above-mentioned O-band is already populated with GPON upstream wavelengths that range from 1290 nm to 1330 nm, and with XGS-PON upstream wavelengths that range from 1260 nm to 1280 nm. Any new technology for optical communications preferably makes use of the O-band because of its good dispersion properties. The O-band has a low dispersion sensibility, meaning that different frequency components travel at similar speeds. Hence, consecutive symbols each comprising multiple wavelength components show little or no overlap as they travel over the fibre. As a result, limited or no equalisation is required. The wavelength plan of such new technology that prefers to take benefit of the good dispersion properties of the O-band hence must allow coexistence with the GPON upstream wavelengths and XGS-PON upstream wavelengths already in use. Otherwise, the new technology could not be deployed in existing networks without replacing all ONUs.

New technologies for optical communications with higher downstream and upstream rates could also attempt to use alternate wavelength bands, like for instance the infrared C-band ranging from 1530 nm to 1565 nm. Higher wavelength bands like the C-band however are more sensitive to dispersion thus requiring more complex and more expensive transceivers implementing more advanced digital signal processing (DSP) techniques like equalisation.

One way to increase the spectral efficiency in optical communications to enable higher downstream and upstream rates relies on Dense Wavelength Division Multiplexing, abbreviated DWDM. In a dual-band bi-directional DWDM system for example, the wavelengths used for the downstream channel and upstream channel are spaced apart but closely spaced to each other. In an example architecture, the downstream channels and upstream channels may zipper or alternate and be 50 GHz spaced apart. As a consequence, optical multiplexers/demultiplexers that combine or separate the bi-directional communications to/from different ONUs must have a bandwidth of 100 GHz. The optical filters that separate the downstream channel from the upstream channel within each optical transceiver at OLT-side or ONU-side must have a bandwidth of 50 GHz. Such narrow, steep optical filters are complex and expensive to make. As a consequence, the DWDM technology seems to be restricted to fronthaul applications wherein the complete C-band is occupied with bi-directional point-to-point links to respective radio cells that are equipped with expensive transceivers, but fails to find its way towards residential applications that bring optical fibre to home.

If WDM or DWDM would be combined with time division multiplexing wherein different timeslots on a downstream wavelength or an upstream wavelength are assigned to different ONUs to implement Time and Wavelength Division Multiplexing, abbreviated TWDM, very stable burst mode transmitters are required, making each ONU even more costly.

As an alternative to using different wavelengths for the downstream channel and upstream channel, the same wavelength could be exploited for downstream communication from OLT to ONU and upstream communication from ONU to OLT. Such Full Duplex communication, abbreviated FDX, requires active cancellation of all echo such that the receiver of upstream signals at the OLT is not plagued by reflections of simultaneously transmitted downstream signals, or vice versa the receiver of downstream signals at the ONU is not plagued by reflections of simultaneously transmitted upstream signals. Active echo cancellation techniques have been demonstrated to successfully cancel point reflections like reflections at a transceiver, optical splitter or multiplexer in the optical distribution network. The often dominant Rayleigh backscattering that results from random reflections of the optical signal in each segment of the optical fibres in the optical distribution network however are more difficult or even impossible to cancel through active echo cancellation. In particular when long optical fibres are used, Rayleigh backscattering is spread in time and impossible to cancel with a limited number of cancellation taps in the active echo canceller.

International patent application WO 2014/183504 A1 entitled "Using Noisy Window for Uncalibrated Optical Network Unit Activation" involves the selection of a set of ONUs by the OLT. WO 2014/183504 A1 describes a method using a noisy window and associated management messages to support set splitting when activating ONUs with an uncalibrated transmitter, offering a power grant for unmodulated upstream transmission, measuring the average received optical power in all upstream wavelength channels and providing a downstream indication of the upstream wavelength channel with abnormally high average received power.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object to disclose embodiments of a full duplex optical line termination and full duplex optical network unit with improved spectral efficiency, that enable coexistence with older technologies like GPON or XGS-PON, and which do not require expensive transceivers with steep, narrowband optical filters and/or multi-tap active echo cancellers.

This object is achieved, according to a first example aspect of the present disclosure, by an optical line termination as defined by claim 1, for communicating over an optical communication network with plural optical network units, the optical line termination comprising:
- a transmitter configured to transmit downstream optical signals to the optical network units using time division and/or wavelength division multiplexing;
- a receiver configured to receive upstream optical signals from the optical network units using time division and/or wavelength division multiplexing in full duplex operation with the transmitter; and
- a scheduler configured to:
   - group the optical network units in at least a first group of optical network units whose optical loss budget across the optical communication network is smaller than an optical loss limit and a second group of optical network units whose optical loss budget across the optical communication network is greater than an optical loss limit;
   - control the transmitter to transmit downstream optical signals at a first transmit power in a first time interval and/or at a first wavelength, and allow only optical network units of the first group to transmit upstream optical signals in the first time interval and/or at the first wavelength; and
   - control the transmitter to transmit downstream optical signals at a second transmit power, smaller than the first transmit power, in a second time interval and/or at a second wavelength, and allow optical network units of the second group to transmit upstream optical signals in the second time interval and/or at the second wavelength.

Thus, embodiments of the invention exploit the near-far effect in a shared medium, and couples the downstream scheduling and upstream scheduling in such a way that effects from echo are avoided or mitigated thereby enabling full duplex communication using the same wavelength while not requiring active echo cancellation. The near-far effect is exploited by grouping ONUs at least into a first group of ONUs whose optical loss budget is below a certain, predefined optical loss limit, and a second group of ONUs whose optical loss budget is above that certain, predefined optical loss limit. The optical loss budget corresponds to the loss in energy or power of an optical signal as a result of travelling across the optical communication network. In other words, the optical loss budget corresponds to the difference between transmit power at the transmitter and received power at the receiver for an optical signal. Generally, the optical loss budget is expressed in decibels (dB) as a positive number and increases with the length of the optical fibre along which the optical signal has to travel and with the splitting factor on the branch of the point-to-multipoint network from the transmitter to the receiver. In the present specification, ONUs with a small optical loss budget will be referred to as "near" to the OLT, regardless of the fact the small optical loss budget is due to short fibres or due to a small split factor. In other words, a so called near-ONU may not be physically near to the OLT. Likewise, an ONU with large optical loss budget will be referred to as "far" from the OLT, regardless its actual physical distance from the OLT. As an example, the first group may contain all ONUs whose optical loss budget across the optical communication network is smaller than 22 dB. These ONUs typically correspond to the near-ONUs that communicate with the OLT over shorter optical fibres or with a smaller split factor as a result of which their optical loss remains smaller than 22 dB. The second group may contain all ONUs whose optical loss budget across the communication network is greater than 22 dB. These ONUs typically correspond to the far-ONUs that communicate with the OLT over longer optical fibres or with a larger split factor as a result of which their optical loss is higher than 22 dB. It is noticed that the optical loss budget usually is expressed as a positive number indicative for the loss. The terms "smaller" and "greater" used here above to group ONUs must be considered to refer to the absolute values of the optical loss budget. ONUs having an optical loss budget smaller than 22 dB thus constitute ONUs having an optical loss budget whose absolute value is smaller than 22 dB, for instance ONUs with optical loss budget between 14 dB and 22 dB. Similarly, ONUs having an optical loss budget greater than 22 dB constitute ONUs having an optical loss budget whose absolute value is greater than 22 dB, for instance ONUs with optical loss budget between 22 dB and 29 dB. If it is assumed in the above example that the OLT transmitter and ONU transmitters respectively transmit downstream signals and upstream signals at the same transmit power of for instance 10 dBm (or 10 mWatt), and if it is assumed that the echo of the downstream transmitted signal by the OLT transmitter enters the upstream OLT receiver with a loss in power of 32 dB (which is a reasonable assumption taking into account Rayleigh scattering on standard single mode fibres and typical PON network design targets), upstream transmitted signals by ONUs of the first group suffering an optical loss budget that is smaller than 22 dB will be received by the OLT receiver at a power level that exceeds the echo of simultaneously transmitted downstream signals and provides an optical signal-to-noise ratio (abbreviated OSNR) sufficient for reliable communication. Consequently, the scheduler can allow the OLT transmitter to downstream transmit at a first power level, for instance full power corresponding to 10 dBm, while allowing only ONUs of the first group - the near-ONUs - to simultaneously transmit upstream signals, using the same wavelength. In such first time interval where the OLT transmitter is transmitting at full power, the second group of ONUs - the far-ONUs - shall not be allowed to transmit upstream signals on the wavelength(s) used for downstream transmission because such upstream signals would be received at a signal power insufficiently exceeding the echo noise power, resulting in an OSNR too low for reliable communication. In order to enable the far-ONUs to upstream transmit without requiring active echo cancellation, the scheduler controls the downstream OLT transmitter to transmit at a second power level substantially smaller than the first power level, for example 7 dBm below the full transmit power, during a second time interval (on a wavelength that was used for full power transmission during a first time interval) and/or at a second wavelength (differing from the wavelength(s) that were used for full power transmission). During the second time interval and/or at the second wavelength, the far-ONUs can simultaneously transmit upstream signals that will arrive at the OLT receiver at a power level sufficiently exceeding the echo noise power because the latter echo noise power is reduced to the same extent the downstream transmit power is reduced, i.e. -7 dB in the above given example.

Summarizing, in embodiments of the invention, the OLT transmitter is controlled to downstream transmit at a first, high power level, e.g. full power, while the OLT receiver is controlled to listen during the same time interval and/or at the same wavelength to upstream signals from a first group of near-ONUs only. The OLT transmitter is further controlled to downstream transmit at a second, reduced power level to near-ONUs and possibly conditionally to far-ONUs, while the OLT receiver is controlled to listen during the same time interval and/or at the same wavelength to upstream signals from far-ONUs and possibly also near-ONUs. The table below gives an overview:

| | OLT | near-ONU | far-ONU |
|---|---|---|---|
| 1st time interval | Tx full power | Tx | not Tx |
| 1st wavelength | Rx | Rx | Rx |
| 2nd time interval | TX reduced power | Tx conditionally | Tx |
| 2nd wavelength | Rx | Rx | Rx conditionally |

Full duplex transmission on a single wavelength becomes possible without requiring active echo cancellation by adjusting the transmit Power Spectral Density (abbreviated PSD). In this way, the capacity is doubled as compared to systems with wavelength separated upstream and downstream channels despite the fact the active echo cancellation is not required, and expensive, steep upstream/downstream optical filters are avoided in the OLT and ONUs. The increase in spectral efficiency inherent to full duplex operation wherein a same wavelength is used for simultaneous downstream and upstream transmissions, can be exploited to deploy embodiments of the invention that make use of the available gaps in the O-band thus allowing coexistence with old technologies like GPON or XGS-PON.

In the context of various embodiments of the invention, OLT or Optical Line Termination refers to any central station equipped with one or plural optical transceivers, and therefore is not limited to a PON OLT. Similarly, in the context of various embodiments of the invention, ONU or Optical Network Unit refers to any remote station equipped with an optical transceiver and typically sharing an optical fibre with other ONUs in a time division and/or wavelength division multiplexed way. ONU therefore is not limited to PON ONU. It is further noticed that in the context of various embodiments of the invention, optical communication network refers to any network comprising one or plural optical fibres to interconnect plural ONUs with an OLT. Optical communication network may be a PON comprising a feeder fibre, passive splitters/multiplexers, and individual distribution fibres, but alternatively may be an optical distribution network comprising active components, or even an optical communication network consisting of a single, shared optical fibre as is used in fronthaul mobile applications for instance.

It is further noticed that alternate embodiments of the invention may be dynamic in time (different groups of ONUs are allowed to upstream transmit in different time intervals wherein respective downstream transmit power levels are applied), or may be dynamic in wavelength (different groups of ONUs are allowed to upstream transmit at different wavelengths whereon respective downstream transmit power levels are applied), or may be dynamic both in time and in wavelength.

In embodiments of the optical line termination defined by claim 2, the scheduler is further configured to:
- obtain a measure indicative for ONU-to-ONU echo for echoes in between respective pairs of the optical network units; and
- allow also an optical network unit of the first group to transmit upstream optical signals in the second time interval and/or at the second wavelength if ONU-to-ONU echo measured for transmission by the optical network unit and reception by other optical network units of the first group is below a predefined echo limit.

Indeed, in the second time interval and/or at the second wavelength where downstream transmissions take place at reduced power to allow far-ONUs to simultaneously upstream transmit, also one or several near-ONUs may be allowed to upstream transmit signals. In determining which near-ONUs are allowed to upstream transmit, advantageous embodiments of the invention consider the ONU-to-ONU echo in between pairs of the near-ONUs. If the ONU-to-ONU echo from a first near-ONU to a second near-ONU exceeds a certain echo limit, it may be preferred to not allow the first near-ONU to upstream transmit signals as such upstream transmissions may prevent the second near-ONU from simultaneously receiving downstream signals since the latter downstream signals are transmitted at reduced power. Therefore, the ONU-to-ONU echo may be measured for echoes between pairs of ONUs and inventorized such that knowledge of the ONU-to-ONU echoes can be used in a criterion to select which near-ONUs (of the first group) are still allowed to upstream transmit in time intervals and/or at wavelengths where downstream transmissions take place with reduced transmit power. An alternative measure indicative for the echo between two ONUs could be the optical loss link budget of each ONU. The difference in optical loss link budget between ONUs can be used to model, bound or estimate the ONU-to-ONU echo. Indeed, if the link budgets are significantly different, then the near-far effect is large, and the ONUs are more likely connected to different splitting stages which leads to a reduced ONU-to-ONU echo.

In embodiments of the optical line termination defined by claim 3, the scheduler is further configured to control the optical network unit of the first group to transmit upstream optical signals in the second time interval and/or at the second wavelength at a third transmit power, smaller than the first transmit power.

Thus, the amount of near-ONUs that is allowed to upstream transmit in time intervals and/or at wavelengths where the downstream transmission takes place with reduced transmit power, can be increased by tuning the transmit power of these near-ONUs. A near-ONU whose ONU-to-ONU echo into another near-ONU is above the echo limit may be allowed to upstream transmit at a third transmit power level below full power or smaller than the first power level whereat the near-ONU is usually transmitting. This way, the echo induced by this near-ONU in other near-ONUs can be reduced to a level below the echo limit, such that the near-ONU can be allowed to upstream transmit without hampering downstream transmissions at reduced transmit power. In embodiments that support upstream transmission at a reduced, third power level, the scheduler in the OLT must be able to calculate the third power level from the optical loss budget of that ONU (such that there is sufficient upstream receive OSNR when transmitting at the third power level) and/or from the measured ONU-to-ONU echo values, and the scheduler must be able to communicate the third power level to the respective ONUs that in turn must be able to receive and interpret the communication from the OLT, and dynamically adapt their transmit power. The third power level may be a single power level to be applied by all near-ONUs in time intervals and/or at wavelengths where downstream transmissions take place with reduced transmit power, or in more advanced embodiments may be an individual value for a single near-ONU that is different for different near-ONUs.

In embodiments of the optical line termination defined by claim 4, the scheduler is further configured to create for a single physical optical network unit that supports a plurality of modulation formats, plural virtual optical network units each corresponding to said physical optical network unit operating with a respective one of the modulation formats, and to group the virtual optical network units in possibly different groups of network units.

It is noticed that the OSNR required for reliable communication depends on the modulation format that is used. For instance, a 4-level Pulse Amplitude Modulation (PAM-4) format requires a larger OSNR than a Non-Return-to-Zero (NRZ) modulation format. It is therefore understood that the optical loss limit depends on the desired modulation format. In other words, for a given optical loss between the ONU and OLT, a given ONU may be placed in different groups depending on the modulation format. For example, an ONU that, during the second time interval, is not able to reliably receive a downstream PAM-4 signal may still reliable receive a downstream NRZ signal. In this respect, a single physical ONU that is capable to dynamically switch between two modulation formats may be considered as being comprised of two virtual ONUs, each capable of a single modulation format, and the first virtual ONU may reside in the first group whereas the second virtual ONU may reside in the second group.

In embodiments of the optical line termination defined by claim 5, the scheduler is further configured to control the transmitter to switch, on a particular wavelength, from transmitting downstream optical signals at the first transmit power to transmitting downstream optical signals at the second transmit power, or vice versa.

Indeed, as mentioned here above, embodiments of the invention may be dynamic in time. In such embodiments, a particular wavelength is used during a first time interval for full power downstream transmission while upstream transmissions are restricted to near-ONUs only. In this first time interval, downstream timeslots may be assigned to both near-ONUs and far-ONUs whereas upstream timeslots are assigned only to near-ONUs. The same wavelength is used during a second time interval for downstream transmission at reduced transmit power to enable simultaneous upstream transmissions by far-ONUs and possibly also near-ONUs whose ONU-to-ONU echo is below an echo limit as explained here above. In this second time interval, downstream timeslots are assigned to near-ONUs and conditionally to far-ONUs for downstream transmissions at reduced power whereas upstream timeslots may be assigned to both far-ONUs and near-ONUs, the latter subject to the echo condition.

In embodiments of the optical line termination defined by claim 6, a guard time at least equal to the impulse response duration of echo on the optical communication network is inserted between transmitting downstream optical signals at the first transmit power and receiving upstream optical signals from optical network units of the second group.

Indeed when making the transition from downstream transmitting at full power in a first time interval to downstream transmitting at reduced power in a second time interval, care must be taken that reflections of the full power transmitted downstream signals do not arrive at the OLT receiver congruently with upstream signals from far-ONUs that are low in receive power because of the higher optical loss budget of these far-ONUs. This can be realized by inserting a guard time in between the first time interval and the second time interval in embodiments of the invention that are dynamic in time. The guard interval preferably equals or exceeds the impulse response duration of echo on the optical communication network. In this context, the impulse response duration must be understood as the duration required for the received echo power level to be low enough to allow sufficient OSNR for reception of upstream signals from far-ONUs. It is noticed that this echo impulse response duration can be substantial for instance in optical communication networks with long distance fibres and dominant Rayleigh backscattering.

In embodiments of the optical line termination defined by claim 7, the scheduler is further configured to control the transmitter to transmit downstream optical signals at the first transmit power on a first set of wavelengths and to transmit downstream optical signals at the second transmit power on a second set of wavelengths.

Indeed, as mentioned here above, embodiments of the invention may be dynamic in wavelength. In such embodiments, a first set of wavelengths (consisting of one or plural first wavelengths) is used for full power downstream transmission while upstream transmissions are restricted to near-ONUs only. At a first wavelength, downstream timeslots may be assigned to both near-ONUs and far-ONUs whereas upstream timeslots are assigned only to near-ONUs. A second set of wavelengths (consisting of one or plural second wavelengths different from the first wavelengths), is used for downstream transmission at reduced transmit power to enable simultaneous upstream transmissions by far-ONUs and possibly also near-ONUs whose ONU-to-ONU echo is below an echo limit as explained here above. At the second wavelengths, downstream timeslots are assigned to near-ONUs and conditionally to far-ONUs whereas upstream timeslots may be assigned to both far-ONUs and near-ONUs, the latter subject to the echo condition.

In embodiments of the optical line termination defined by claim 8, the scheduler is further configured to adapt the first set of wavelengths and the second set of wavelengths dynamically over time.

Indeed, as already indicated here above, embodiments of the invention may be dynamic both in wavelength and time. The first wavelengths used for full power downstream transmission in a first time interval and the first wavelengths used for full power downstream transmission in a second time interval may be different. Likewise, the second wavelengths used for downstream transmission at reduced power in a first time interval and the second wavelengths used for downstream transmission in a second time interval may be different. This way, the bandwidth assigned to near-ONUs and far-ONUs may be adjusted dynamically over time. Alternatively, the lengths of the time intervals may be varied over time to dynamically control bandwidth assigned to near-ONUs and far-ONUs.

In embodiments of the optical line termination defined by claim 9, the scheduler is further configured to:
- group the optical network units in more than two groups of optical network units with respectively similar optical loss budgets across the communication network; and
- control the transmitter to transmit downstream optical signals to respective groups of optical network units at respective transmit powers in different time intervals and/or at different wavelengths, and allow optical network units of respective groups to transmit upstream optical signals in the different time intervals and/or at the different wavelengths.

Indeed, the skilled person will appreciate that in more advanced embodiments of the invention, ONUs are grouped into plural sets of ONUs with similar optical loss budget or similar distance from the OLT. Optical loss budget intervals may for instance be predefined and ONUs may be grouped according to their optical loss budget in one of these predefined groups. This way, the scheduling freedom can be improved as well as the ability to reach a higher system throughput or even higher spectral efficiency.

In embodiments of the optical line termination defined by claim 10, the scheduler is further configured to control the transmitter to gradually decrease transmit power on a particular wavelength over time for transmitting downstream optical signals to optical network units of a gradually decreasing selection of the groups having decreasing similar optical loss budgets, and to gradually allow optical network units of an increasing selection of the groups having increasing similar optical loss budgets to transmit upstream optical signals on the wavelength.

Thus, more than two groups of ONUs improve the scheduling freedom. In subsequent time intervals for example, the downstream transmit power may be decreased gradually in steps. Consequently, the amount of groups of ONUs that will be addressed through downstream transmissions shall gradually decrease from all ONUs in an initial time interval to groups of ONUs with gradually decreasing distance to the OLT. In the reverse direction, the upstream direction, the amount of ONU groups that will be allowed to upstream transmit shall gradually increase from near-ONUs only in the initial time interval to all ONUs in the last time interval. The sequence of time intervals shall be repeated with lengths of the time intervals being determined statically or dynamically to accommodate the bandwidth demands of the different groups of ONUs. Instead of being dynamic in time, embodiments allowing more than two groups of ONUs, can also be dynamic in wavelength (more than two sets of wavelengths are assigned to respective groups of ONUs with different downstream transmit powers being used on different sets of wavelengths to enable simultaneous upstream reception of signals from ONUs that suffer a similar optical loss without requiring active echo cancellation), or they can be dynamic in both time and wavelength.

Embodiments of the optical line termination defined by claim 11, further comprise:
- an active echo canceller configured to cancel echo of transmitted downstream optical signals in received upstream optical signals.

Indeed, although active echo cancellation is not required in embodiments of the invention, a limited amount of active echo cancellation may help to further reduce the echo or relax the transceiver implementation requirements. A single tap echo canceller or few taps echo canceller for example allows to reduce the requirements on the circulator or hybrid units in the optical transceivers, or it allows to cancel a single or limited number of dominant reflections, for instance at a connector interface or an optical distribution frame. By cancelling such echo components using low complexity echo cancellers, the scheduling freedom can be improved, and the second transmit power can be increased in comparison to embodiments without active echo cancellation.

In embodiments of the optical line termination defined by claim 12, the wavelength for transmission of downstream signals to an optical network unit and the wavelength for receipt of upstream signals from that same optical network unit are slightly separated.

Indeed, the skilled person will appreciate that further reduction of the received echo signal can be achieved by slightly separating the transmission wavelength from the reception wavelength. As a result of the slight separation, part of the echo signal will be received outside of the receiver bandwidth, reducing the received echo power. The reduced received echo signal allows further flexibility in the scheduling and in the selection of transmit power, or it enables to achieve optical budget ranges that would otherwise not be possible. Here, a slight separation intends to indicate that the separation is not large enough for the echo signal to fall entirely outside the filter bandwidth of the receiver. As an example, if the wavelengths are shifted by half the bandwidth of the receiver filter, half of the echo power is filtered out and only half of the echo power is received, leading to a 3 dB reduction in echo noise power. Wavelength separation can hence be used to design a trade-off between flexibility and spectral efficiency. From the perspective of WDM, embodiments of the present invention allow to bring zipper or alternating wavelengths closer than would traditionally be possible, increasing the spectral efficiency, or would allow the use of cheaper components such as wavelength filters, reducing the overall cost to achieve the same spectral efficiency.

The above defined object is achieved, according to a second example aspect of the present disclosure, by a method as defined by claim 13, for scheduling communication over an optical communication network between an optical line termination and plural optical network units, wherein:
- downstream optical signals are transmitted from a transmitter in the optical line termination to the optical network units using time division and/or wavelength division multiplexing;
- upstream optical signals from the optical network units are received by a receiver in the optical line termination using time division and/or wavelength division multiplexing in full duplex operation with the transmitter; and
- wherein the method for scheduling further comprises:
   - grouping of optical network units in at least a first group of optical network units whose optical loss budget across the optical communication network is smaller than an optical loss limit and a second group of optical network units whose optical loss budget across the optical communication network is greater than the optical loss limit;
   - controlling the transmitter to transmit downstream optical signals at a first transmit power in a first time interval and/or at a first wavelength, and allowing only optical network units of the first group to transmit upstream optical signals in the first time interval and/or at the first wavelength; and
   - controlling the transmitter to transmit downstream optical signals at a second transmit power, smaller than the first transmit power, in a second time interval and/or at a second wavelength, and allowing optical network units of the second group to transmit upstream optical signals in the second time interval and/or at the second wavelength.

### Brief Description of the Drawings

Some example embodiments will now be described with reference to the accompanying drawings.
Fig. 1 illustrates downstream/upstream transmissions in an example embodiment, during a first time interval wherein downstream transmissions are scheduled at full power;
Fig. 2 illustrates downstream/upstream transmissions in the example embodiment of Fig. 1, during a second time interval wherein downstream transmissions are scheduled at reduced power; and
Fig. 3 shows an example embodiment of a suitable computing system 300 for implementing the scheduler 103 in the embodiment of Fig. 1, and for performing one or several steps in embodiments of the invention.

### Detailed Description of Embodiment(s)

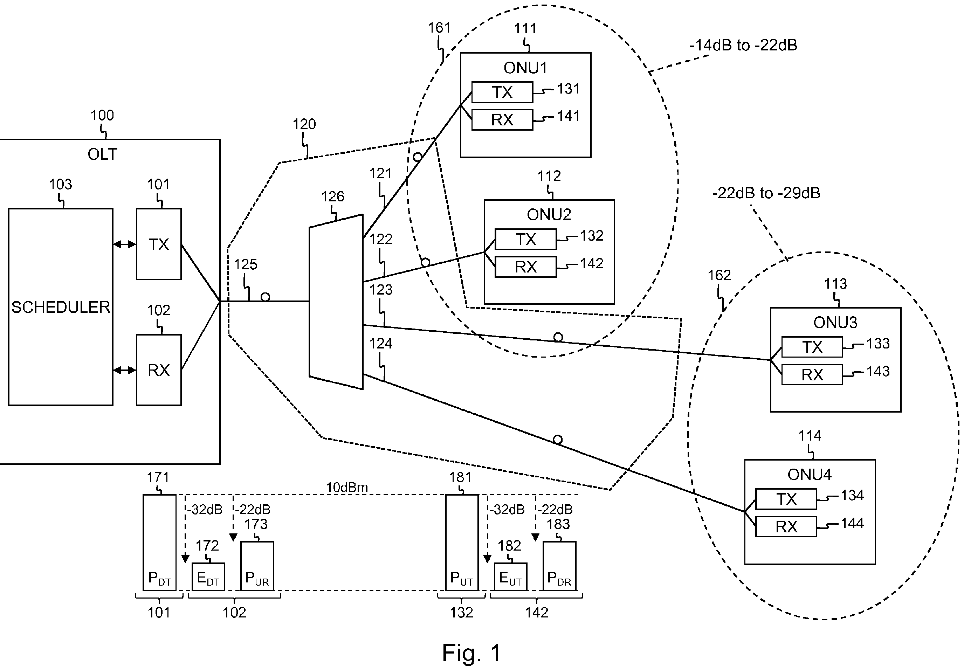

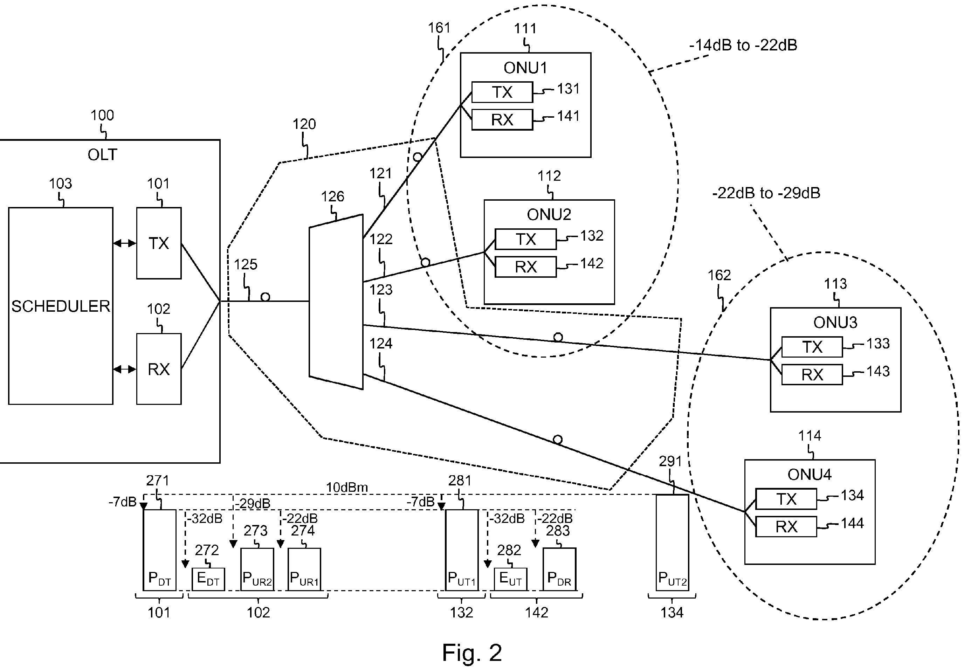

Fig. 1 and Fig. 2 show a passive optical network comprising an optical line termination, OLT or 100, and several optical network units, ONU1-ONU4 or 111-114. OLT 100 is coupled to ONUs 111-114 via a feeder fibre 125, an optical splitter/multiplexer 126, and respective distribution fibres 121-124. The feeder fibre 125, optical splitter/multiplexer 126 and distribution fibres 121-124 jointly establish an optical communication network 120. OLT 100 is equipped with an optical transmitter 101, an optical receiver 102 and a scheduler 103. The ONUs 111-114 are equipped with respective optical transmitters 131-134 and respective optical receivers 141-144. It is assumed that a single wavelength is used for full duplex communication on all optical fibres 121-125. In the numerical example given in Fig. 1 and Fig. 2, it is also assumed that all optical transmitters, 101 and 131-134, have the same maximum transmission power of 10 dBm or 10 mWatt.

The scheduler 103 of Fig. 1 and Fig. 2 is configured to measure the optical loss budgets of the ONUs 111-114 or receives the optical loss budgets of these ONUs 111-114 from a component in the network that measures the optical loss budgets. As is further indicated in Fig. 1 and Fig. 2, and with the numerical example given, the scheduler 103 thereupon groups the ONUs 111-114 into a first group 161 of ONUs 111-112 whose optical loss budget is lying between 14 dB and 22 dB, the near-ONUs typically connected to OLT 100 via shorter optical fibres, and a second group 162 of ONUs 113-114 whose optical loss budget is lying between 22 dB and 29 dB, the far-ONUs typically connected to OLT 100 via longer optical fibres.

The scheduler 103 exploits the near-far effect of the ONUs 111-114 and schedules the downstream/upstream transmissions in such a way that the effects from echo are avoided or mitigated without requiring active echo cancelling. Thereto, during a first time interval illustrated by Fig. 1, the scheduler 103 controls the OLT transmitter 101 to downstream transmit at a power level P_{DT} that corresponds to its full power 171. As a result thereof, the OLT receiver 102 shall receive an echo E_{DT} of the downstream transmitted signal with power level 172 that is, in this numerical example, assumed to be 32 dB below the transmit power 171. For the downstream transmission during the first time interval, the scheduler 103 shall assign timeslots to all ONUs 111-114 according to their needs and/or service levels as specified in service level agreements. A downstream transmitted signal destined for ONU 112 shall be received by optical receiver 142 with power level P_{DR} that corresponds to 183. If it is assumed that the optical loss budget for ONU 112 is 22 dB, the power level 183 of the received downstream signal at ONU 112 is 22 dB below the downstream transmit power 171. For all other ONUs that belong to the first group 161, the power level of the received downstream signal will be equal to or higher than 183. During the first time interval, only ONUs 111-112 of the first group 161 are allowed to transmit upstream signals. The scheduler 103 assigns upstream timeslots in the first time interval only to ONUs 111-112 that form part of the first group 161, and for instance controls transmitter 132 in ONU 112 to upstream transmit signals with an upstream transmit power P_{UT} that corresponds to its full transmission power 181. An echo E_{UT} of the upstream transmitted signal is received by the optical receiver 142 in ONU 112. This echo E_{UT} has a power level 182 that is also assumed to be 32 dB below the transmit power level 181. Th upstream transmitted signal is received by the OLT receiver 102 with a power level P_{UR} that corresponds to 173. This power level is 22 dB below the transmit power level 181 as it was assumed here above that ONU 112 has an optical loss budget of 22 dB. Upstream signals transmitted by other ONUs of the first group 161 will be received by OLT receiver 102 with a power level that is equal to or higher than 173 as the ONUs 111-112 that form part of this first group 161 all have an optical loss budget between 14 dB and 22 dB. By scheduling downstream transmissions in the first time interval at full power 171 and allowing only near-ONUs that belong to the first group 161 to congruently transmit upstream signals at full power 181, the optical signal to noise ratio OSNR at the OLT receiver will stay above 10 dB. This OSNR corresponds to the difference between the power levels of received upstream signals and the echo E_{DT} and is at worst 10 dB as explained here above. Similarly, the OSNR at the near-ONU receivers 141-142 will stay above 10 dB. This OSNR corresponds to the difference between the power levels 183 of received downstream signals and the power level 182 of echo E_{UT} and is at worst 10 dB as explained here above. Far-ONUs 113-114 are not allowed to upstream transmit during the first time interval. Due to their higher optical loss budget up to 29 dB, upstream signals that would be transmitted by the far-ONUs 113-114 during the first time interval would not be detectable without implementing complex and expensive multi-tap echo cancellation at the OLT. During the first time interval however, the scheduler 103 can control OLT transmitter 101 to downstream transmit signals to the far-end ONUs 113-114. The far-end ONUs 113-114 will be able to detect these signals because their receivers are not plagued by echoes of their own upstream transmissions during this first time interval.

Summarizing, during the first time interval illustrated by Fig. 1, the OLT transmits downstream signals at full power to any ONU, and receives upstream signals only from near-ONUs that belong the first group 161. The scheduler 103 assigns downstream timeslots and upstream timeslots such that from OLT perspective full-duplex operation is achieved during the first time interval.

Fig. 2 illustrates the downstream transmission and upstream transmission during a second time interval. In this second time interval, the scheduler 103 assigns downstream timeslots only to near-ONUs 111-112 that belong to the first group, and further controls the OLT transmitter 101 to transmit the downstream signals with a reduced power level P_{DT} that corresponds to 271. In the example of Fig. 2, the reduced power level 271 is 7 dB below the full transmit power level 171 of OLT transmitter 101. As a consequence of the reduced downstream transmit power 271 also the echo E_{DT} of this downstream transmitted signal that enters the OLT receiver has a power level 272 that is 7 dB lower than the echo power level 172 when downstream transmitting at full power. The downstream transmit power reduction of 7 dB (and corresponding echo power level reduction at the OLT receiver 102) is chosen to compensate for the differential optical loss between ONUs of the first group 161 and ONUs of the second group 162. The differential optical loss between these two groups of ONUs is 7 dB (difference between 29 dB worst scenario in the second group 162 and 22 dB worst scenario in the first group 161). As a consequence thereof, an upstream transmitted signal from far-ONU 114, transmitted at a power level P_{UT2} that corresponds to the full transmit power 291 of transmitter 134 shall be received by OLT receiver 102 with a power level P_{UR2} that corresponds to 273. This received power level 273 shall be 29 dB below the full transmit power 291 of transmitter 134 if it is assumed that the optical loss budget of ONU 114 is 29 dB. For all other ONUs that belong to the second group 162, the upstream transmitted signals will be received at a power level equal to or greater than 273 because the optical loss budgets of these far-ONUs lies between 22 dB and 29 dB. The received upstream power level 273 for far-ONUs during the second time interval shall at least be 10 dB above the power level 272 of the echo E_{DT} that enters the OLT receiver, hence providing an OSNR of at least 10 dB for upstream transmissions by far-ONUs during the second time interval. Optionally, the scheduler 103 may also assign upstream timeslots to near-ONUs 111-112 of the first group 161 during the second time interval. Preferably however, the scheduler shall first obtain information on ONU-to-ONU echo induced by upstream transmissions from the near-ONUs, and in function of this ONU-to-ONU echo control the near-ONUs to upstream transmit at a reduced transmit power level during the second time interval. In the example of Fig. 2, the scheduler 103 instructs transmitter 132 of near-ONU 112 to transmit at a power level 281 that is 7 dB below its full transmit power. As a consequence thereof, the echo E_{UT} induced in receiver 142 by the upstream transmitted signals at power level P_{UT1} corresponding to 281, shall have a power level 282 that is lower than the echo power level 182 induced when upstream transmitting at full power. Downstream transmitted signals destined for near-ONU 112 shall despite the reduced downstream transmit power 271 still be received by receiver 142 at a power level P_{DR} corresponding to 283. This power level 283 is 22 dB below the reduced downstream transmit power 271 as it is assumed that ONU 112 has an optical loss budget of 22 dB. For all other near-ONUs in the first group 161, the downstream signals transmitted with reduced downstream transmit power will be received at a power level that is equal to or greater than 283 because these near-ONUs all have an optical loss budget between 14 dB and 22 dB. The near-ONUs shall be able to receive and detect the downstream transmitted signals during the second time interval without requiring complex and expensive multi-tap echo cancelling because their receiver OSNR shall anyhow stay above 10 dB.

Summarizing, during the second time interval, the scheduler assigns downstream timeslots only to near-ONUs and controls the OLT transmitter 101 to downstream transmit at reduced transmit power. Simultaneously, both far-ONUs and near-ONUs can be assigned upstream timeslots, albeit possible the scheduler 103 shall instruct near-ONUs to upstream transmit at reduced transmit power in view of measured ONU-to-ONU echo. From OLT perspective, this results in full duplex transmission also during the second time interval.

It is noticed that the scheduler 103 should take into account the time dimension of the echo impulse response in between full power downstream transmission (operation following Fig. 1) and reduced power downstream transmission (operation following Fig. 2). Due to the length of the echo impulse response, operation according to Fig. 2 immediately after operation according to Fig. 1 must be avoided, for example through insertion of a guard time of appropriate length in between the first time interval and the second time interval.

Although the embodiments illustrated by Fig. 1 and Fig. 2 are dynamic in time, it is noticed that variant embodiments can be contemplated that are dynamic in wavelength, or dynamic in both wavelength and time. In case the next generation passive optical networks for example would exploit two or more wavelengths, one wavelength could be used for operation as illustrated by Fig. 1 and another wavelength could be used for operation as illustrated by Fig. 2.

Although the numerical example described here above corresponds to a typical optical distribution network with maximum optical loss budget of 29 dB and differential optical loss of 15 dB (optical loss budget ranging from 14 dB to 29 dB), the skilled person will appreciate that application of the invention is not limited thereto. In alternate embodiments, the transmit power can for instance be adjusted to more than two distinct levels to accommodate a larger differential loss or larger optical loss budgets.

It is further noticed that in alternate embodiments, the ONUs can be grouped into more than two groups of ONUs with respective similar optical loss budgets, i.e. optical loss budget within respective predefined ranges. As already mentioned above, this would further improve the scheduling freedom and the ability to reach an even higher spectral efficiency and system throughput, as the echo mitigation could now work on a per-group basis.

Although embodiments of the invention do not require expensive, multi-tap echo cancellation, a limited amount of active echo cancellation may help to further reduce the echo and relax the transceiver implementation. A single tap or few tap echo canceller may for example allow to reduce the requirements on the circulator unit or hybrid unit in the optical transceivers, and therefore could be considered in conjunction with embodiments of the invention.

When applied in combination with DWDM, embodiments of the invention may assist in reducing the wavelength spacing. The more echo is mitigated through the scheduling according with embodiments of the present invention, the closer wavelengths can be spaced given the same filter performance. Alternatively, when the wavelengths are not spaced closer, the cost of the filters can be reduced thanks to the echo mitigating scheduling in accordance with embodiments of the invention.

It is noticed that the technique according to the present invention applies beyond optical access networks. For example also in Passive Optical LANs, embodiments of the invention could be deployed with similar advantages.

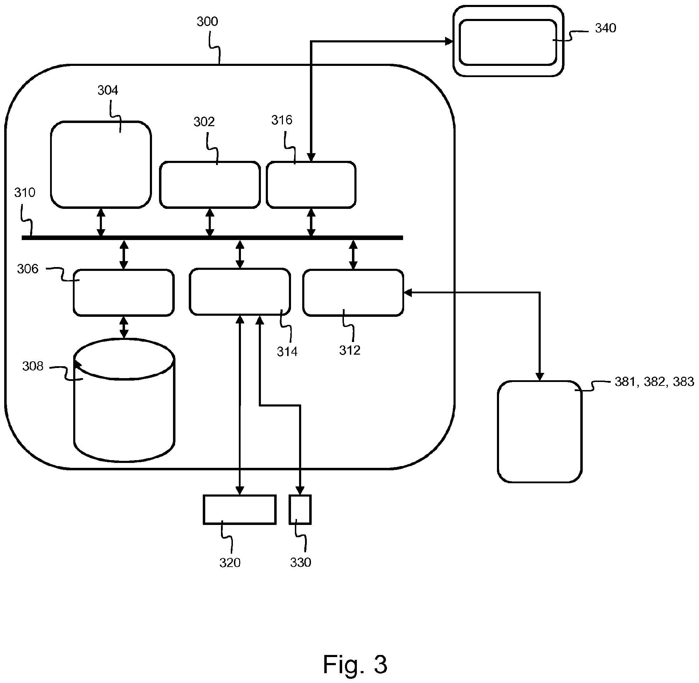

Fig. 3 shows a suitable computing system 300 enabling to implement the scheduler 103 and embodiments of the method for scheduling communication over en optical communication network. Computing system 300 may in general be formed as a suitable general-purpose computer and comprise a bus 310, a processor 302, a local memory 304, one or more optional input interfaces 314, one or more optional output interfaces 316, a communication interface 312, a storage element interface 306, and one or more storage elements 308. Bus 310 may comprise one or more conductors that permit communication among the components of the computing system 300. Processor 302 may include any type of conventional processor or microprocessor that interprets and executes programming instructions. Local memory 304 may include a random-access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator or user to input information to the computing device 300, such as a keyboard 320, a mouse 330, a pen, voice recognition and/or biometric mechanisms, a camera, etc. Output interface 316 may comprise one or more conventional mechanisms that output information to the operator or user, such as a display 340, etc. Communication interface 312 may comprise any transceiver-like mechanism such as for example one or more Ethernet interfaces that enables computing system 300 to communicate with other devices and/or systems, for example with other computing devices 381, 382, 383. The communication interface 312 of computing system 300 may be connected to such another computing system by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage element(s) 308 above is/are described as a local disk, in general any other suitable computer-readable media such as a removable magnetic disk, optical storage media such as a CD or DVD, -ROM disk, solid state drives, flash memory cards, ... could be used. Computing system 300 could thus correspond to the scheduler 103 in the embodiments illustrated by Fig. 1 or Fig. 2.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical line termination (100) for communicating over an optical communication network (120) with plural optical network units (111, 112, 113, 114), said optical line termination (100) comprising:
- a transmitter (101) configured to transmit downstream optical signals to said optical network units (111, 112, 113, 114) using time division and/or wavelength division multiplexing;
- a receiver (102) configured to receive upstream optical signals from said optical network units (111, 112, 113, 114) using time division and/or wavelength division multiplexing in full duplex operation with said transmitter (101); **CHARACTERISED IN THAT** said optical line termination (100) further comprises:
- a scheduler (103) configured to:
- group said optical network units (111, 112, 113, 114) in at least a first group (161) of optical network units (111, 112) whose optical loss budget across said optical communication network (120) is smaller than an optical loss limit and a second group (162) of optical network units (113, 114) whose optical loss budget across said optical communication network (120) is greater than said optical loss limit;
- control said transmitter (101) to transmit downstream optical signals at a first transmit power in a first time interval and/or at a first wavelength, and allow only optical network units (111, 112) of said first group (161) to transmit upstream optical signals in said first time interval and/or at said first wavelength; and
- control said transmitter (101) to transmit downstream optical signals at a second transmit power, smaller than said first transmit power, in a second time interval and/or at a second wavelength, and allow optical network units (113, 114) of said second group (162) to transmit upstream optical signals in said second time interval and/or at said second wavelength.

2. The optical line termination (100) according to claim 1, wherein said scheduler (103) is further configured to:
- obtain a measure indicative for ONU-to-ONU echo for echoes in between respective pairs of said optical network units (111, 112, 113, 114); and
- allow also an optical network unit (112) of said first group (161) to transmit upstream optical signals in said second time interval and/or at said second wavelength if ONU-to-ONU echo measured for transmission by said optical network unit (112) and reception by other optical network units (111) of said first group (161) is below a predefined echo limit.

3. The optical line termination (100) according to claim 2, wherein said scheduler (103) is further configured to control said optical network unit (112) of said first group to transmit upstream optical signals in said second time interval and/or at said second wavelength at a third transmit power, smaller than said first transmit power.

4. The optical line termination (100) according to one of the preceding claims, wherein said scheduler is further configured to create for a single physical optical network unit that supports a plurality of modulation formats, plural virtual optical network units each corresponding to said physical optical network unit operating with a respective one of said modulation formats, and to group said virtual optical network units in possibly different groups of network units.

5. The optical line termination (100) according to one of the preceding claims, wherein said scheduler (103) is further configured to control said transmitter (101) to switch, on a particular wavelength, from transmitting downstream optical signals at said first transmit power to transmitting downstream optical signals at said second transmit power, or vice versa.

6. The optical line termination (100) according to claim 5, wherein a guard time at least equal to the impulse response duration of echo on said optical communication network (120) is inserted between transmitting downstream optical signals at said first transmit power and receiving upstream optical signals from optical network units (113, 114) of said second group (162).

7. The optical line termination (100) according to one of the preceding claims, wherein said scheduler (103) is further configured to control said transmitter (101) to transmit downstream optical signals at said first transmit power on a first set of wavelengths and to transmit downstream optical signals at said second transmit power on a second set of wavelengths.

8. The optical line termination (100) according to claim 7, wherein said scheduler (103) is further configured to adapt said first set of wavelengths and the second set of wavelengths dynamically over time.

9. The optical line termination (100) according to one of the preceding claims, wherein said scheduler (103) is further configured to:
- group said optical network units (111, 112, 113, 114) in more than two groups of optical network units with respectively similar optical loss budgets across said communication network (120); and
- control said transmitter (101) to transmit downstream optical signals to respective groups of optical network units at respective transmit powers in different time intervals and/or at different wavelengths, and allow optical network units of respective groups to transmit upstream optical signals in said different time intervals and/or at said different wavelengths.

10. The optical line termination (100) according to claim 9, wherein said scheduler (103) is further configured to control said transmitter (101) to gradually decrease transmit power on a particular wavelength over time for transmitting downstream optical signals to optical network units of a gradually decreasing selection of said groups having decreasing similar optical loss budgets, and to gradually allow optical network units of an increasing selection of said groups having increasing similar optical loss budgets to transmit upstream optical signals on said wavelength.

11. The optical line termination (100) according to one of the preceding claims, further comprising:
- an active echo canceller configured to cancel echo of transmitted downstream optical signals in received upstream optical signals.

12. The optical line termination (100) according to one of the preceding claims, wherein the wavelength for transmission of downstream signals to an optical network unit and the wavelength for receipt of upstream signals from said optical network unit are slightly separated.

13. A method for scheduling communication over an optical communication network (120) between an optical line termination (100) and plural optical network units (111, 112, 113, 114), wherein:
- downstream optical signals are transmitted from a transmitter (101) in said optical line termination (100) to said optical network units (111, 112, 113, 114) using time division and/or wavelength division multiplexing;
- upstream optical signals from said optical network units (111, 112, 113, 114) are received by a receiver (102) in said optical line termination (100) using time division and/or wavelength division multiplexing in full duplex operation with said transmitter (101); and
- wherein said method for scheduling further comprises:
- grouping said optical network units (111, 112, 113, 114) in at least a first group (161) of optical network units (111, 112) whose optical loss budget across said optical communication network (120) is smaller than an optical loss limit and a second group (162) of optical network units (113, 114) whose optical loss budget across said optical communication network (120) is greater than said optical loss limit;
- controlling said transmitter (101) to transmit downstream optical signals at a first transmit power in a first time interval and/or at a first wavelength, and allowing only optical network units (111, 112) of said first group (161) to transmit upstream optical signals in said first time interval and/or at said first wavelength; and
- controlling said transmitter (101) to transmit downstream optical signals at a second transmit power, smaller than said first transmit power, in a second time interval and/or at a second wavelength, and allowing optical network units (113, 114) of said second group (162) to transmit upstream optical signals in said second time interval and/or at said second wavelength.

## Patentansprüche

1. Optischer Leitungsabschluss (100) für die Kommunikation über ein optisches Kommunikationsnetzwerk (120) mit mehreren optischen Netzwerkeinheiten (111, 112, 113, 114), wobei der optische Leitungsabschluss (100) umfasst:
- einen Sender (101), der so konfiguriert ist, dass er unter Verwendung von Zeitmultiplex- und/oder Wellenlängenmultiplexverfahren stromabwärts gerichtete optische Signale an die optischen Netzwerkeinheiten (111, 112, 113, 114) sendet;
- einen Empfänger (102), der so konfiguriert ist, dass er unter Verwendung von Zeitmultiplex- und/oder Wellenlängenmultiplexverfahren im Vollduplexbetrieb mit dem Sender (101) stromaufwärts gerichtete optische Signale von den optischen Netzwerkeinheiten (111, 112, 113, 114) empfängt;
**dadurch gekennzeichnet, dass** der optische Leitungsabschluss (100) ferner Folgendes umfasst:
- einen Scheduler (103), der so konfiguriert ist, dass er:
- die optischen Netzwerkeinheiten (111, 112, 113, 114) in mindestens einer ersten Gruppe (161) von optischen Netzwerkeinheiten (111, 112) gruppiert, deren optisches Dämpfungsbudget über das optische Kommunikationsnetzwerk (120) hinweg kleiner als eine optische Dämpfungsgrenze ist, und einer zweiten Gruppe (162) von optischen Netzwerkeinheiten (113, 114) gruppiert, deren optisches Dämpfungsbudget über das optische Kommunikationsnetzwerk (120) hinweg größer als die optische Dämpfungsgrenze ist;
- den Sender (101) derart steuert, dass dieser stromabwärts gerichtete optische Signale mit einer ersten Sendeleistung in einem ersten Zeitintervall und/oder mit einer ersten Wellenlänge sendet, und nur optischen Netzwerkeinheiten (111, 112) der ersten Gruppe (161) erlaubt, stromaufwärts gerichtete optische Signale in dem ersten Zeitintervall und/oder mit der ersten Wellenlänge zu senden; und
- den Sender (101) derart steuert, dass dieser stromabwärts gerichtete optische Signale mit einer zweiten Sendeleistung, die kleiner als die erste Sendeleistung ist, in einem zweiten Zeitintervall und/oder mit einer zweiten Wellenlänge sendet, und optischen Netzwerkeinheiten (113, 114) der zweiten Gruppe (162) erlaubt, stromaufwärts gerichtete optische Signale in dem zweiten Zeitintervall und/oder mit der zweiten Wellenlänge zu senden.

2. Optischer Leitungsabschluss (100) nach Anspruch 1, wobei der Scheduler (103) ferner so konfiguriert ist, dass er:
- ein Maß erhält, das indikativ für das Echo von optischer Netzwerkeinheit zu optischer Netzwerk (ONU-zu-ONU) für Echos zwischen jeweiligen Paaren der optischen Netzwerkeinheiten (111, 112, 113, 114) ist; und
- auch einer optischen Netzwerkeinheit (112) der ersten Gruppe (161) erlaubt, stromaufwärts gerichtete optische Signale in dem zweiten Zeitintervall und/oder mit der zweiten Wellenlänge zu senden, wenn ein ONU-zu-ONU-Echo, das für die Übertragung durch die optische Netzwerkeinheit (112) und für den Empfang durch andere optische Netzwerkeinheiten (111) der ersten Gruppe (161) gemessen wurde, unter einer vorbestimmten Echogrenze liegt.

3. Optischer Leitungsabschluss (100) nach Anspruch 2, wobei der Scheduler (103) ferner so konfiguriert ist, dass er die optische Netzwerkeinheit (112) der ersten Gruppe derart steuert, dass diese stromaufwärts gerichtete optische Signale in dem zweiten Zeitintervall und/oder mit der zweiten Wellenlänge mit einer dritten Sendeleistung sendet, die kleiner als die erste Sendeleistung ist.

4. Optischer Leitungsabschluss (100) nach einem der vorstehenden Ansprüche, wobei der Scheduler ferner so konfiguriert ist, dass er für eine einzelne physische optische Netzwerkeinheit, die eine Vielzahl von Modulationsformaten unterstützt, mehrere virtuelle optische Netzwerkeinheiten erzeugt, die jeweils der physischen optischen Netzwerkeinheit entsprechen, die mit einem jeweiligen der Modulationsformate arbeitet, und die virtuellen optischen Netzwerkeinheiten in möglicherweise unterschiedlichen Gruppen von Netzwerkeinheiten gruppiert.

5. Optischer Leitungsabschluss (100) nach einem der vorstehenden Ansprüche, wobei der Scheduler (103) ferner so konfiguriert ist, dass er den Sender (101) derart steuert, dass dieser auf einer bestimmten Wellenlänge vom Senden von stromabwärts gerichteten optischen Signalen mit der ersten Sendeleistung zum Senden von stromabwärts gerichteten optischen Signalen mit der zweiten Sendeleistung umschaltet oder umgekehrt.

6. Optischer Leitungsabschluss (100) nach Anspruch 5, wobei zwischen dem Senden von stromabwärts gerichteten optischen Signalen mit der ersten Sendeleistung und dem Empfangen von stromaufwärts gerichteten optischen Signalen von optischen Netzwerkeinheiten (113, 114) der zweiten Gruppe (162) eine Schutzzeit eingefügt wird, die mindestens der Impulsantwortdauer des Echos in dem optischen Kommunikationsnetzwerk (120) entspricht.

7. Optischer Leitungsabschluss (100) nach einem der vorstehenden Ansprüche, wobei der Scheduler (103) ferner so konfiguriert ist, dass er den Sender (101) derart steuert, dass dieser stromabwärts gerichtete optische Signalen mit der ersten Sendeleistung auf einem ersten Satz von Wellenlängen sendet und stromabwärts gerichtete optische Signale mit der zweiten Sendeleistung auf einem zweiten Satz von Wellenlängen sendet.

8. Optischer Leitungsabschluss (100) nach Anspruch 7, wobei der Scheduler (103) ferner so konfiguriert ist, dass er den ersten Satz von Wellenlängen und den zweiten Satz von Wellenlängen im Laufe der Zeit dynamisch anpasst.

9. Optischer Leitungsabschluss (100) nach einem der vorstehenden Ansprüche, wobei der Scheduler (103) ferner so konfiguriert ist, dass er:
- die optischen Netzwerkeinheiten (111, 112, 113, 114) in mehr als zwei Gruppen optischer Netzwerkeinheiten mit jeweils ähnlichen optischen Dämpfungsbudgets über das Kommunikationsnetzwerk (120) hinweg gruppiert; und
- den Sender (101) derart steuert, dass dieser stromabwärts gerichtete optische Signale an entsprechende Gruppen von optischen Netzwerkeinheiten mit entsprechenden Sendeleistungen in unterschiedlichen Zeitintervallen und/oder mit unterschiedlichen Wellenlängen sendet, und optischen Netzwerkeinheiten von entsprechenden Gruppen erlaubt, stromaufwärts gerichtete optische Signale in diesen unterschiedlichen Zeitintervallen und/oder mit diesen unterschiedlichen Wellenlängen zu senden.

10. Optischer Leitungsabschluss (100) nach Anspruch 9, wobei der Scheduler (103) ferner so konfiguriert ist, dass er den Sender (101) derart steuert, dass dieser die Sendeleistung auf einer bestimmten Wellenlänge im Laufe der Zeit allmählich verringert, um stromabwärts gerichtete optische Signale an optische Netzwerkeinheiten einer allmählich abnehmenden Auswahl der Gruppen mit abnehmenden ähnlichen optischen Dämpfungsbudgets zu senden, und um es optischen Netzwerkeinheiten einer zunehmenden Auswahl der Gruppen mit zunehmenden ähnlichen optischen Dämpfungsbudgets allmählich zu erlauben, stromaufwärts gerichtete optische Signale auf dieser Wellenlänge zu senden.

11. Optischer Leitungsabschluss (100) nach einem der vorstehenden Ansprüche, ferner umfassend:
- einen aktiven Echounterdrücker, der so konfiguriert ist, dass er das Echo von gesendeten stromabwärts gerichteten optischen Signalen in empfangenen stromaufwärts gerichteten optischen Signalen unterdrückt.

12. Optischer Leitungsabschluss (100) nach einem der vorstehenden Ansprüche, wobei die Wellenlänge für die Übertragung von stromabwärts gerichteten Signalen zu einer optischen Netzwerkeinheit und die Wellenlänge für den Empfang von stromaufwärts gerichteten Signalen von der optischen Netzwerkeinheit geringfügig voneinander getrennt sind.

13. Verfahren zur Ablaufsteuerung der Kommunikation über ein optisches Kommunikationsnetzwerk (120) zwischen einem optischen Leitungsabschluss (100) und mehreren optischen Netzwerkeinheiten (111, 112, 113, 114), wobei:
- unter Verwendung von Zeitmultiplex- und/oder Wellenlängenmultiplexverfahren stromabwärts gerichtete optische Signale von einem Sender (101) in dem optischen Leitungsabschluss (100) an die optischen Netzwerkeinheiten (111, 112, 113, 114) gesendet werden;
- unter Verwendung von Zeitmultiplex- und/oder Wellenlängenmultiplexverfahren im Vollduplexbetrieb mit dem Sender (101) stromaufwärts gerichtete optische Signale von den optischen Netzwerkeinheiten (111, 112, 113, 114) von einem Empfänger (102) in dem optischen Leitungsabschluss (100) empfangen werden; und
- wobei das Verfahren zur Ablaufsteuerung ferner Folgendes umfasst:
- Gruppieren der optischen Netzwerkeinheiten (111, 112, 113, 114) in mindestens einer ersten Gruppe (161) von optischen Netzwerkeinheiten (111, 112), deren optisches Dämpfungsbudget über das optische Kommunikationsnetzwerk (120) hinweg kleiner als eine optische Dämpfungsgrenze ist, und einer zweiten Gruppe (162) von optischen Netzwerkeinheiten (113, 114), deren optisches Dämpfungsbudget über das optische Kommunikationsnetzwerk (120) hinweg größer als die optische Dämpfungsgrenze ist;
- Steuern des Senders (101) derart, dass dieser stromabwärts gerichtete optische Signale mit einer ersten Sendeleistung in einem ersten Zeitintervall und/oder mit einer ersten Wellenlänge sendet, und nur optischen Netzwerkeinheiten (111, 112) der ersten Gruppe (161) erlaubt, stromaufwärts gerichtete optische Signale in dem ersten Zeitintervall und/oder mit der ersten Wellenlänge zu senden; und
- Steuern des Senders (101) derart, dass dieser stromabwärts gerichtete optische Signale mit einer zweiten Sendeleistung, die kleiner als die erste Sendeleistung ist, in einem zweiten Zeitintervall und/oder mit einer zweiten Wellenlänge sendet, und Erlauben, dass die optischen Netzwerkeinheiten (113, 114) der zweiten Gruppe (162) stromaufwärts gerichtete optische Signale in dem zweiten Zeitintervall und/oder mit der zweiten Wellenlänge senden.

## Revendications

1. Terminaison de ligne optique (100) destinée à communiquer sur un réseau de communication optique (120) avec plusieurs unités de réseau optique (111, 112, 113, 114), ladite terminaison de line optique (100) comprenant :
- un émetteur (101) configuré pour transmettre des signaux optiques aval auxdites unités de réseau optique (111, 112, 113, 114) à l'aide d'un multiplexage par répartition dans le temps et/ou d'un multiplexage par répartition en longueur d'onde ;
- un récepteur (102) configuré pour recevoir des signaux optiques amont de la part desdites unités de réseau optique (111, 112, 113, 114) à l'aide d'un multiplexage par répartition dans le temps ou par répartition en longueur d'onde en duplex intégral avec ledit émetteur (101) ;
**caractérisée en ce que** ladite terminaison de ligne optique (100) comprend en outre :
- un programmateur (103) configuré pour :
- regrouper lesdites unités de réseau optique (111, 112, 113, 114) en au moins un premier groupe (161) d'unités de réseau optique (111, 112) dont le budget de perte optique sur ledit réseau de communication optique (120) est inférieur à une limite de perte optique, et un second groupe (162) d'unités de réseau optique (113, 114) dont le budget de perte optique sur ledit réseau de communication optique (120) est supérieur à ladite limite de perte optique,
- contrôler ledit émetteur (101) afin de transmettre des signaux optiques aval à une première puissance de transmission sur un premier intervalle de temps et/ou à une première longueur d'onde, et autoriser uniquement les unités de réseau optique (111, 112) dudit premier groupe (161) à émettre des signaux optiques amont sur ledit premier intervalle de temps et/ou à ladite première longueur d'onde ; et
- contrôler ledit émetteur (101) afin de transmettre des signaux optiques aval à une seconde puissance de transmission, inférieure à ladite première puissance de transmission, sur un second intervalle de temps et/ou à une seconde longueur d'onde, et autoriser les unités de réseau optique (113, 114) dudit second groupe (162) à transmettre des signaux optiques amont sur ledit second intervalle de temps et/ou à ladite seconde longueur d'onde.

2. Terminaison de ligne optique (100) selon la revendication 1, dans laquelle ledit programmateur (103) est en outre configuré pour :
- obtenir une mesure qui indique un écho d'unités de réseau optique à unité de réseau optique pour les échos entre des paires respectives desdites unités de réseau optique (111, 112, 113, 114) ; et
- autoriser également une unité de réseau optique (112) dudit premier groupe (161) à transmettre des signaux optiques amont sur ledit second intervalle de temps et/ou à ladite seconde longueur d'onde si l'écho d'unité de réseau optique à unité de réseau optique mesuré pour la transmission par ladite unité de réseau optique (112) et la réception par les autres unités de réseau optique (111) dudit premier groupe (161) est inférieur à une limite d'écho prédéfinie.

3. Terminaison de ligne optique (100) selon la revendication 2, dans laquelle ledit programmateur (103) est en outre configuré pour contrôler ladite unité de réseau optique (112) dudit premier groupe afin de transmettre des signaux optiques amont sur ledit second intervalle de temps et/ou à ladite seconde longueur d'onde à une troisième puissance de transmission, inférieure à ladite première puissance de transmission.

4. Terminaison de ligne optique (100) selon l'une des revendications précédentes, dans laquelle ledit programmateur est en outre configuré pour créer, pour une seule unité de réseau optique physique qui prend en charge une pluralité de formats de modulation, plusieurs unités de réseau optique virtuelles qui correspondent chacune à ladite unité de réseau optique physique qui fonctionne avec l'un desdits formats de modulation, et pour regrouper lesdites unités de réseau optique virtuelles en différents groupes d'unités de réseau.

5. Terminaison de ligne optique (100) selon l'une des revendications précédentes, dans laquelle ledit programmateur (103) est en outre configuré pour contrôler ledit émetteur (101) afin qu'il passe, sur une longueur d'onde particulière, de la transmission de signaux optiques aval à ladite première puissance de transmission à la transmission de signaux optiques aval à ladite seconde puissance de transmission, ou inversement.

6. Terminaison de ligne optique (100) selon la revendication 5, dans laquelle un temps de garde égal à la durée de réponse impulsionnelle de l'écho sur ledit réseau de communication optique (120) est inséré entre la transmission de signaux optiques aval à ladite première puissance de transmission et la réception de signaux optiques amont de la part des unités de réseau optique (113, 114) dudit second groupe (162) .

7. Terminaison de ligne optique (100) selon l'une des revendications précédentes, dans laquelle ledit programmateur (103) est en outre configuré pour contrôler ledit émetteur (101) afin de transmettre des signaux optiques aval à ladite première puissance de transmission sur un premier groupe de longueurs d'onde et de transmettre des signaux optiques aval à ladite seconde puissance de transmission sur un second groupe de longueurs d'onde.

8. Terminaison de ligne optique (100) selon la revendication 7, dans laquelle ledit programmateur (103) est en outre configuré pour adapter ledit premier groupe de longueurs d'onde et le second groupe de longueurs d'onde dynamiquement au fil du temps.

9. Terminaison de ligne optique (100) selon l'une des revendications précédentes, dans laquelle ledit programmateur (103) est en outre configuré pour :
- regrouper lesdites unités de réseau optique (111, 112, 113, 114) en plus de deux groupes d'unités de réseau optique ayant des budgets de perte optique respectivement similaires sur ledit réseau de communication (120) ; et
- contrôler ledit émetteur (101) afin de transmettre des signaux optiques aval à des groupes respectifs d'unités de réseau optique à des puissances de transmission respectives sur différents intervalles de temps et/ou à différentes longueurs d'onde, et autoriser les unités de réseau optique des groupes respectifs à transmettre des signaux optiques amont sur lesdits intervalles de temps différents et/ou auxdites longueurs d'onde différentes.

10. Terminaison de ligne optique (100) selon la revendication 9, dans laquelle ledit programmateur (103) est en outre configuré pour contrôler ledit émetteur (101) afin de réduire progressivement la puissance de transmission sur une longueur d'onde particulière au fil du temps afin de transmettre des signaux optiques aval aux unités de réseau optique d'une sélection progressivement décroissante desdits groupes qui présentent des budgets de perte optique décroissants similaires, et pour autoriser progressivement les unités de réseau optique d'une sélection croissante desdits groupes qui présentent des budgets de perte optique croissants similaires à transmettre des signaux optiques amont sur ladite longueur d'onde.

11. Terminaison de ligne optique (100) selon l'une des revendications précédentes, comprenant en outre :
- un compensateur d'écho actif configuré pour annuler l'écho des signaux optiques aval transmis au sein des signaux optiques amont reçus.

12. Terminaison de ligne optique (100) selon l'une des revendications précédentes, dans laquelle la longueur d'onde destinée à la transmission de signaux aval vers une unité de réseau optique et la longueur d'onde destinée à la réception de signaux amont de la part de ladite unité de réseau optique sont légèrement séparées.

13. Procédé de programmation d'une communication sur un réseau de communication optique (120) entre une terminaison de ligne optique (100) et plusieurs unités de réseau optique (111, 112, 113, 114), dans lequel :
- des signaux optiques aval sont transmis entre un émetteur (101) sur ladite terminaison de ligne optique (100) et lesdites unités de réseau optique (111, 112, 113, 114) à l'aide d'un multiplexage par répartition dans le temps et/ou d'un multiplexage par répartition en longueur d'onde ;
- les signaux optiques amont qui proviennent desdites unités de réseau optique (111, 112, 113, 114) sont reçus par un récepteur (102) sur ladite terminaison de ligne optique (100) à l'aide d'un multiplexage par répartition dans le temps et/ou d'un multiplexage par répartition en longueur d'onde en duplex intégral avec ledit émetteur (101) ; et
- dans lequel ledit procédé de programmation comprend en outre :
- le regroupement desdites unités de réseau optique (111, 112, 113, 114) en au moins un premier groupe (161) d'unités de réseau optique (111, 112) dont le budget de perte optique sur ledit réseau de communication optique (120) est inférieur à une limite de perte optique et un second groupe (162) d'unités de réseau optique (113, 114) dont le budget de perte optique sur ledit réseau de communication optique (120) est supérieur à ladite limite de perte optique ;
- le contrôle dudit émetteur (101) afin de transmettre des signaux optiques aval à une première puissance de transmission sur un premier intervalle de temps et/ou à une première longueur d'onde, et le fait d'autoriser uniquement les unités de réseau optique (111, 112) dudit premier groupe (161) à transmettre des signaux optiques amont sur ledit premier intervalle de temps et/ou à ladite première longueur d'onde ; et
- le contrôle dudit émetteur (101) afin de transmettre des signaux optiques aval à une seconde puissance de transmission, inférieure à ladite première puissance de transmission, sur un second intervalle de temps et/ou à une seconde longueur d'onde, et le fait d'autoriser les unités de réseau optique (113, 114) dudit second groupe (162) à transmettre des signaux optiques amont sur ledit second intervalle de temps et/ou à ladite seconde longueur d'onde.
